# EUROPEAN PATENT SPECIFICATION

(11) **EP 3 285 382 B1**
(45) Date of publication and mention of the grant of the patent: **07.10.2020**
(21) Application number: 16184211.7
(22) Date of filing: 15.08.2016
(51) Int. Cl.: H02J 50/10, H02J 50/60, H02J 50/80, H02J 50/90, H02M 1/38, H02M 3/335, H02M 1/00

(54) **DETECTION METHODS**
ERKENNUNGSVERFAHREN
PROCÉDÉS DE DÉTECTION

(43) Date of publication of application: 21.02.2018
(73) Proprietor: Robert Bosch GmbH, 70442 Stuttgart (DE)
(72) Inventor: Riedel, Jan, 573943 Singapore (SG); Mohzani, Zaki, 70442 Stuttgart (DE); Holmes, Grahame, 70442 Stuttgart (DE); Teixeira, Carlos, 70442 Stuttgart (DE)

(56) References cited:
- US-A1- 2014 226 369
- US-A1- 2015 138 840
- NADIA MEI LIN TAN ET AL: "Design and Performance of a Bidirectional Isolated DC DC Converter for a Battery Energy Storage System", IEEE TRANSACTIONS ON POWER ELECTRONICS, INSTITUTE OF ELECTRICAL AND ELECTRONICS ENGINEERS, USA, vol. 27, no. 3, 1 March 2012 (2012-03-01), pages 1237-1248, XP011406675, ISSN: 0885-8993, DOI: 10.1109/TPEL.2011.2108317
- RIEDEL J ET AL: "Harmonic-based determination of soft switching boundaries for 3-level modulated single-phase dual active bridge converters", 2015 IEEE ENERGY CONVERSION CONGRESS AND EXPOSITION (ECCE), IEEE, 20 September 2015 (2015-09-20), pages 1505-1512, XP032800761, DOI: 10.1109/ECCE.2015.7309872 [retrieved on 2015-10-27]

## Description

### Technical Field

The present invention relates to a method of controlling a converter.

### Background

In [1], a mathematical model for the Zero Voltage Switching (ZVS) boundaries of a single phase dual-active dc (direct current)-dc converter for a 2-level bridge output voltage (+DC and -DC), is disclosed. In [2], a mathematical model for the Zero Voltage Switching (ZVS) boundaries of a single phase dual-active dc (direct current)-dc converter for a 3-level bridge output voltage (+DC, 0 and -DC), is disclosed.
[1] J. Riedel, D. Holmes, and B. McGrath, "Identifying zvs soft switching boundaries for bi-directional dual active bridge dc-dc converters using frequency domain analysis," in Power Electronics Conference (IPECSeoul 2015 - ECCE-ASIA), 2015 International, June 2015.
[2] J. Riedel, D. Holmes, C. Teixeira and B. McGrath, "Harmonic-based determination of soft switching boundaries for 3-level modulated single-phase dual-active bridge converters," in Power Electronics Conference (Montreal 2015 - ECCE), 2015 International, September 2015.
   US 2015/138840 A1 discloses a power correction method for correcting transmitted power, which is transmitted between a primary side circuit and a secondary side circuit which is connected to the primary side circuit via a reactor and magnetically coupled with the primary side circuit via a transformer and is adjusted according to a phase difference between switching of the primary side circuit and switching of the secondary side circuit.

The document NADIA MEI LIN TAN ET AL, "Design and Performance of a Bidirectional Isolated DC DC Converter for a Battery Energy Storage System", IEEE TRANSACTIONS ON POWER ELECTRONICS, INSTITUTE OF ELECTRICAL AND ELECTRONICS ENGINEERS, USA, vol. 27, no. 3, doi:10.1109/TPEL.2011.2108317, ISSN 0885-8993, pages 1237 - 1248 describes describes the design and performance of a 6-kW, full-bridge, bidirectional isolated dc-dc converter using a 20-kHz transformer for a 53.2-V, 2-kWh lithium-ion (Li-ion) battery energy storage system.
US 2014226369 A1 relates to a feedback controller of a power converter, for feedback control of a manipulated variable based on a first electrical parameter depending on input power and a feedback controlled variable determined for output power.

### Summary

According to the present invention, a method of controlling a converter as claimed in claim 1 is provided. Throughout the description an "embodiment" belongs to the invention as defined by independent claim 1, only if accordingly to that embodiment (i) a zero voltage switching boundary condition is detected under which a phase shift error between a primary bridge circuit and a secondary bridge circuit of a dual-active bridge converter vanishes, and (ii) a magnetic coupling coefficient of a wireless power transfer system of the dual-active bridge DC-DC converter is determined by inserting the zero voltage switching boundary condition into a mathematical model.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
Fig.1 shows a block diagram and sensed and controlled values;
Fig. 2 shows a flow diagram illustrating a detection method according to various embodiments;
Fig. 3 shows a dual-active DC/DC converter topology;
Fig. 4 shows an example of a discrete impedances representation for an ac coupling impedance or WPT (wireless power transfer or inductive power transfer) transmitter coils;
Fig. 5 shows exemplar primary and secondary bridge output voltages and currents for phase shifted square wave modulation;
Fig. 6A shows an illustration of how phase shift between two converter bridge circuits increases and DC current increases accordingly (at a particular d_{ZVS});
Fig. 6B shows an illustration of how phase shift between two converter bridge circuits increases and DC current stagnates (at a particular d_{ZVS} for a phase shift δ_{ZVS}
Fig. 7 shows ZVS boundaries (according to a mathematical model) and online detected ZVS boundary operating points;
Fig. 8 shows an NPC (Neutral Point Clamped) circuit topology;
Fig. 9 shows a t-type circuit topology; and
Fig. 10 shows an illustration of charging a battery.

### Description

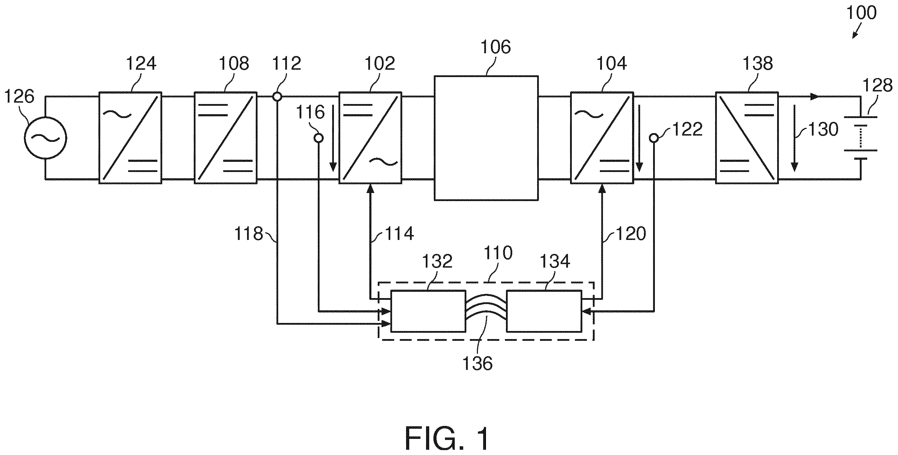

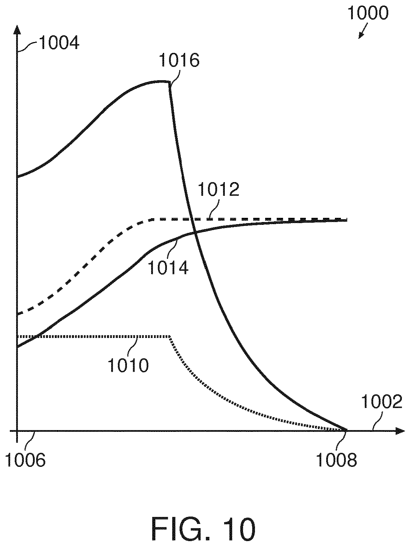

Fig. 1 shows a general system architecture 100 of a dc (direct current)-dc conversion stage with two converter bridges (a first converter bridge 102 and a second converter bridge 104, each of which are connected to a dc bus) that are inter-connected via coupling impedances 106 (for example a transformer and/ or peripherals, for example transmitter coils, and a compensation network). A main transmitter sub-system may include the first converter bridge 102, the second converter bridge 104, and the coupling impedances 106. The first converter bridge 102 may be an active full bridge converter (maybe controlled by gate driver circuits), and may be the sending bridge. The second converter bridge 104 may be an active full bridge converter (maybe controlled by gate driver circuits), and may be the receiving bridge. An optional buck boost converter 108 on the sender side and an optional buck boost converter 138 on the receiver side (for battery charger V-I modes, like illustrated with reference to illustration 1000 of Fig. 10, wherein a horizontal axis 1002 indicates time (with a starting time 1006 and a charging end time 1008), and with respect to a vertical axis 1004 an open circuit voltage 1014 of a battery and charging voltage 1012, charging current 1010, and charging power 1016 are shown) may be provided. A voltage 130 may be applied at a DC source or load 128 on the receiver side. A voltage source (e.g. an ac grid voltage) 126 and an optional ac-dc interface converter 124 may be provided at the sender side. A sender controller 132 may receive a primary side DC input current I_{p,DC} (for example via a line 118; for example from a main sensing interface 112) and a primary side DC input voltage V_{p,DC} (for example via a line 116) from the side of the first converter bridge 102. A receiver controller 134 may receive a secondary side DC output voltage V_{s,DC} (for example via a line 122) from the side of the second converter bridge 104. The sender controller 132 (for example via a line 114) and the receiver controller 134 (for example via a line 120) may control a commanded phase shift δ 514 between the first converter bridge 102 and the second converter bridge The sender controller 132 and the receiver controller 134 may be in communication via a communication channel 136. According to various embodiments, the sender controller 132 and the receiver controller 134 may be combined in a single controller, like indicated by dashed box 110.

Commonly used methodologies measure the parameters of coupling impedance 106 offline (not embedded in the 100 circuit) by using short-circuit and open-loop circuit analysis, which only gives an approximate characterization. However, the actual coupling impedance parameters can vary significantly from the offline measured coupling impedance once the component/s is/are integrated in a final system due to additional unknown circuit impedances. This deviation between the offline measurement and the actual value of the coupling impedance between primary and secondary converter bridge of a DC-DC Dual Active Bridge results in sub-optimal and unsafe operation. Another state-of-the-art method to resolve this problem involves trial and error measurements to construct a lookup table.

A problem with commonly used methodologies may be the unprecise determination of the impedance parameters including the parasitic unknowns of the converter peripherals. A prior characterization using discrete impedance modeling may be insufficient because of the converter parasitic that occur in the construction. Precise impedance parameterization however is required for optimal and safe operation.

According to various embodiments, a prior online impedance detection routine may be carried out before the converter is operated at nominal conditions, (e.g. nominal power). This allows a very precise determination of the existing coupling impedances between the two active converter bridges required for optimal system operation, since it evaluates these impedances embedded inside the final environment of the converter. This detection method can be run at very low power transfer levels, which ensures that no harm is caused to the surrounding system, since the parameters of the coupling impedance are still unknown to the controller 136.

The online impedance detection may be used to ensure optimal and sage operation of the dual-active bridge dc-dc converter
Such an impedance detection may also be applied for health / condition monitoring of the dual-active bridge circuit and embedded components. These components may be semiconductor devices or passive devices (e.g. capacitors or inductors).

The prior online impedance detection does not require any additional sensing architecture. The system architecture 100 in Fig. 1 illustrates that an exemplary sensing device (measuring the dc current on either primary or secondary side) is typically already required by the nominal system operation.

The prior online impedance detection according to various embodiments makes use of a mathematical model for the Zero Voltage Switching (ZVS) boundaries of a dual-active dc-dc converter, published in [1], and tries to match this model to measurement data / integrate this data into a mathematical model to enable a precise prior parameterization of the coupling impedance.

The required measurement data can be extracted out of the system very precisely using the inherent switching dead time, which exists for any voltage source driven converter, which in turn causes a phase shift error inside the hard switching range .This phase shift error completely vanishes once a ZVS boundary operating condition is met. This is further explained in [2].

According to various embodiments, sensorless precise online detection of coupling impedances in dual-active DC (direct current)-DC converter systems using the practical switching impact and a subsequent integration into a mathematical model of the Zero Voltage Switching boundary conditions may be provided.

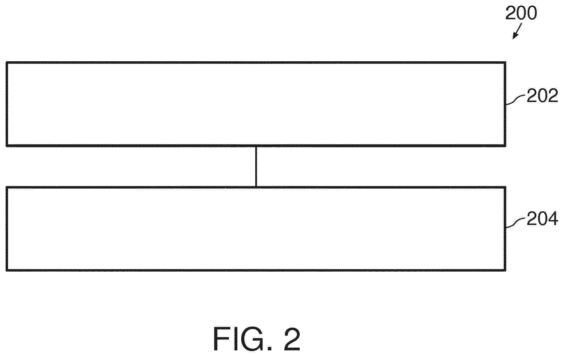

Fig. 2 shows a flow diagram 200 illustrating a detection method according to various embodiments. In 202, an effect of a switching dead time in a converter is determined. In 204, a magnetic coupling coefficient of a wireless power transfer system or at least one parameter of an ac coupling impedance network of a dual-active converter is determined using a mathematical model of the ZVS boundary condition and the determined effect of the switching dead time. The invention as claimed requires that at least the magnetic coupling coefficient is determined.

In other words, an impedance of the converter and/ or its magnetic coupling coefficient may be determined not through direct impedance measurements, but based on the stagnation of a circuit parameter (e.g. DC bus current) despite the increased phase shift angle between the two converter bridges of a dual-active bridge converter.

According to various embodiments, detecting a zero voltage switching boundary condition may include increasing a commanded phase shift between two bridge circuits of the converter.

According to various embodiments, detecting a zero voltage switching boundary condition may include detecting a stagnation of a circuit parameters (e.g. DC bus current) while increasing the phase shift between the two converter bridges
According to various embodiments, the impedance of the converter may be determined based on a lookup table.

According to various embodiments, the impedance of the converter may be determined based on solving a mathematical model.

According to various embodiments, the detection method may further include setting a common switching frequency for two bridge circuits of the converter.

According to various embodiments, the coupling coefficient of the coupling impedance may be determined based on the self-inductance of the two transmitter coils.

To illustrate the functionality of this invention a typical dual-active bridge converter topology is regarded, like illustrated in Fig. 1 (wherein alternative topologies are described in more detail below).

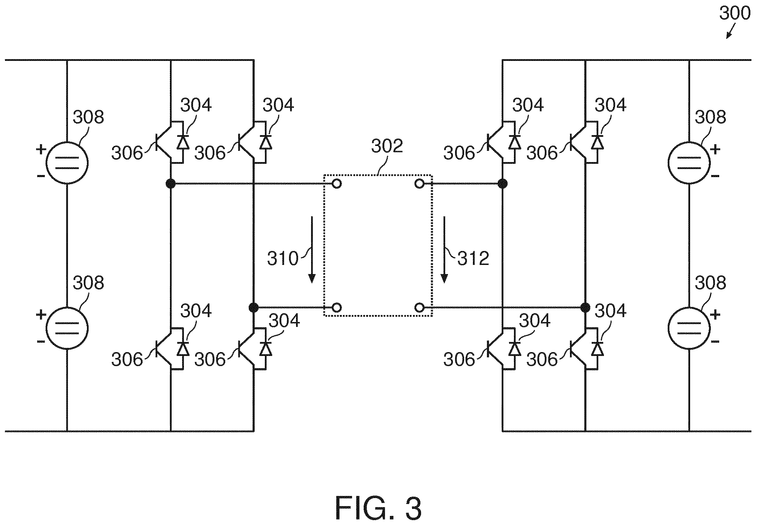

Fig. 3 shows the main transmitter sub-system with a sender and receiver with unknown transmitter coupling impedances [Y] 302. A plurality of diodes 304, a plurality of transistors 306, and a plurality of voltage sources 308 are shown. A general coupling impedance 302, for example a transformer, is shown in Fig. 3.

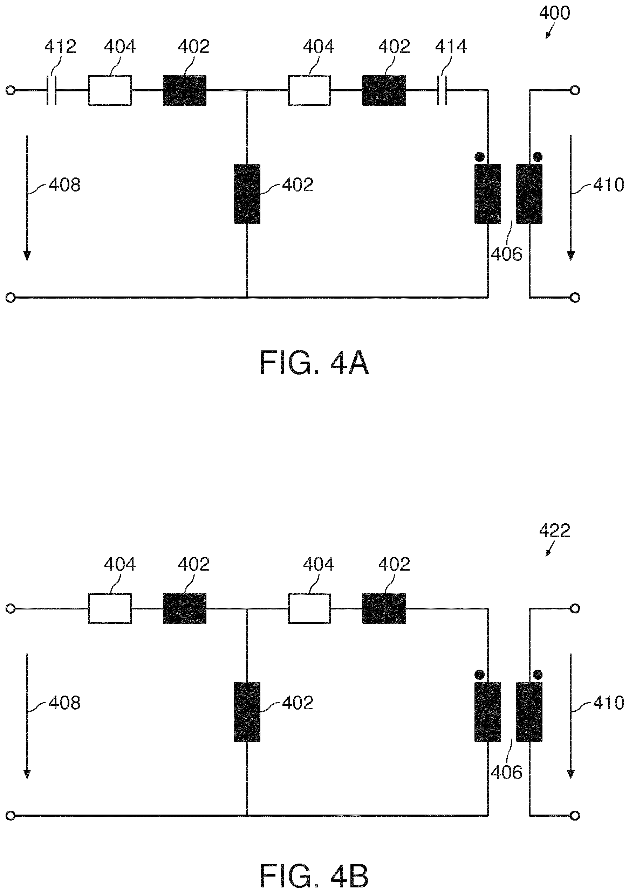

Fig. 4A and Fig. 4B show exemplary circuits using discrete impedances to represent such a coupling impedance 302. Fig. 4A shows a series resonance compensation network 400. A plurality of inductances 402, a plurality of resistors 404, an ideal transformer 406, a first capacitance 412, and a second capacitance 414 are shown. Fig. 4B shows a monotonic network. A plurality of inductances 402, a plurality of resistors 404, an ideal transformer 406, are shown. The circuit model of 400 can turn into 422 if the switching frequency is modified accordingly, e.g. from a nominal switching frequency (e.g. resonant) to a switching frequency f_{detect}. Different voltages 408, 410 may be provided at a sender side and at a receiver side.

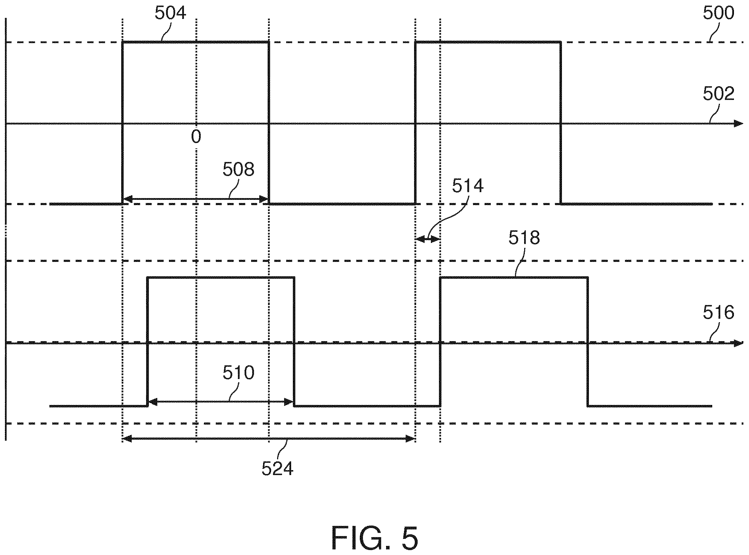

The bridge output voltages and outgoing bridge currents are shown in illustration 500 of Fig. 5. In the top portion of Fig. 5, and with reference to a time axis 502, a voltage 504 on a primary side (in other words: sender side) are illustrated. In the bottom portion of Fig. 5, and with reference to a time axis 516, a voltage 518 and on a secondary side (in other words: receiver side) are illustrated. The first converter bridge output voltage 310 and the second converter bridge output voltage 312 are applied across the terminals of the coupling impedance 302. Following the principles in [1] the time spans 508 and 510 each correspond half a switching period Tₛ/2. 514 is the time delay (in other words: phase shift δ) between the primary and secondary bridge output voltage, and 524 (corresponding to the switching period Tₛ) are shown. This modulation technique is well known as Phase Shifted Square Wave (PSSW) Modulation. Following the principles in [2] reduced time spans 508 and 510 can be applied by the converter bridges.

In the following, a first step (for example a step of collection of measurement data) of a method according to various embodiments will be described.

According to various embodiments, synchronization of the two bridges may be provided. The converter controller may synchronize the converter bridge output voltages 504 and 518, which applied at the terminals of the coupling impedance, like shown in Fig. 5, such that the voltage patterns 504 and 518 are in-phase (master slave synchronization) and the time delay (in other words: phase shift) becomes zero. This is the state of zero active power transfer and the sensed DC bus input or output current I_{p,DC} is typically very low or even zero. A dc-dc bus voltage ratio d can be determined from the primary DC bus voltage 116 versus the secondary DC bus voltage 122 for a known transformer winding ratio Np/Ns.

According to various embodiments, detection of ZVS boundary condition 1 is provided. Next, the converter may be increasing the commanded phase shift (may be set by the controller 110) between the primary and secondary bridge (active power increases) until a defined (absolute) maximum phase shift δₘₐₓ, which equals a maximum active power transfer (from the first converter bridge 108 to the second converter bridge 104, or vice versa) that is accepted in this prior impedance detection routine. This power can be sensed by e.g. a current and voltage sensor (which may correspond to test run #1).

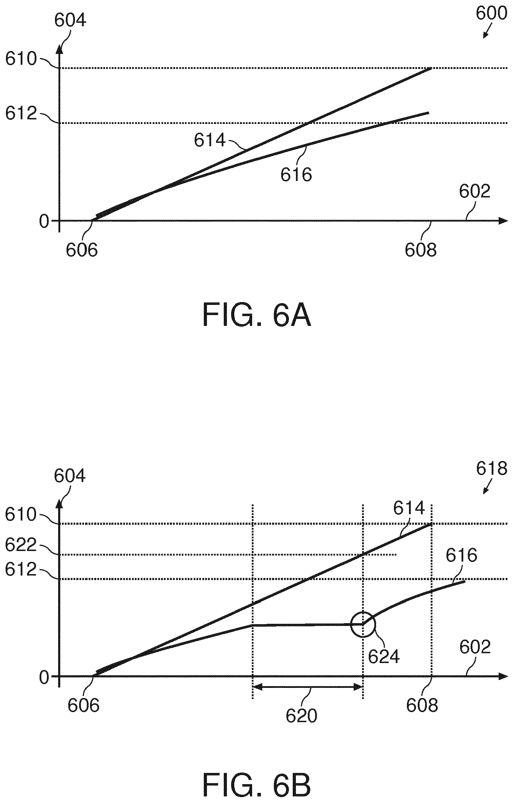

Two scenarios are possible during this measurement scan:
- In the first scenario like illustrated in Fig. 6A, the sensed DC current I_{p,DC} 616 may increase continuously to a maximum current 612 with the commanded phase shift δ 614 until the limit δₘₐₓ 610. Thereby, no ZVS boundary point is detected and the method continues with [0035]. In Fig. 6A, a horizontal axis 602 indicates time with a start point 606 and time of an end point 608, and a vertical axis 604 indicates DC bus current and phase shift.
- In the second scenario like illustrated in Fig. 6B, the sensed DC current value I_{p,DC} increases linearly with the commanded phase shift δ, until the value stops increasing (flat portion during "dead band" 620 in Fig. 6B). The (phase shift) angle δ_{ZVS} at the end of the flat current portion identifies the actual ZVS boundary 624 (which may be detected by the controller), and both the DC (direct current) voltage ratio between 116 and 122, dzvs#i, and the phase shift 8_{ZVS#1} 622 may be recorded. The reason behind this phenomena is the implementation of a minimum dead time into the modulation of the converter bridge circuits, which exists for any voltage source driven converter, and its vanishing impact in certain operating regions where the converter exits the hard switching range (dead time causes a phase shift error between the demanded phase shift by 118 and 120 and the actually applied phase shift 514 in the circuit), and enters the ZVS soft switching region (dead time does not cause a phase shift error . In other words, hard switching may occur left from the ZVS boundary 624 in Fig. 6B, and ZVS soft switching may occur right from the ZVS boundary 624 in Fig. 6B. This is further explained in [2]. The method according to various embodiments provides precise detection of the ZVS soft switching boundaries for a given coupling impedances.

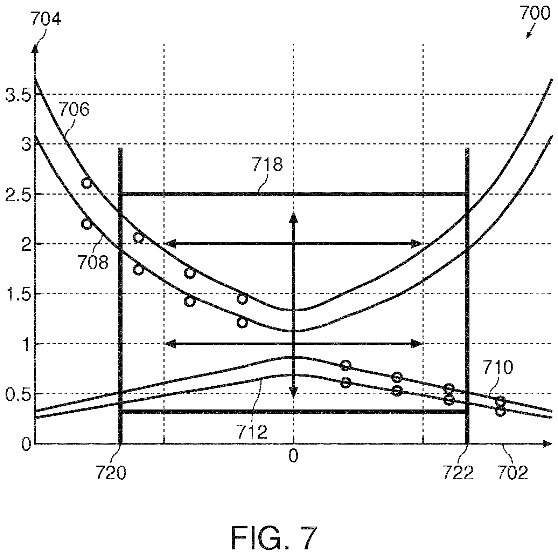

Next, the dc-dc voltage ratio d may be adapted by varying the DC bus output voltages 116 and 122 to detect ZVS boundary operating condition by increasing the phase shift δ from zero to get either get a first test point (dzvs#i, δ_{ZVS#1}) in case of an unsuccessful prior test run according to Fig. 6A or a second test point (d_{ZVS#2}, δ_{ZVS#2}) in case of a successful prior test run according to Fig. 6B, if required by the second step (see below). An exemplary 2D- scan test grid 718 in d-δ frame (in other words: with horizontal axis 702 indicating δ and vertical axis 704 indicating d; wherein 720 represents -δₘₐₓ and 722 represents δₘₐₓ) is shown in Fig. 7. Fig. 7 shows an illustration 700 of ZVS boundaries (according to the mathematical model in [1]) and online detected operating conditions at the ZVS boundary for two different coupling impedances (a first coupling impedance Imp. #1, for example coupling co-efficient of transmitter coils k=0.87) and a second coupling impedance Imp. #2, for example coupling co-efficient of transmitter coils k=0.72). The ZVS boundary conditions (according to the mathematical model in [1]) of the primary converter bridge 102 are illustrated by solid lines 706 for Imp. #2 and 708 for Imp. #1. The ZVS boundary conditions (according to the mathematical model in [1]) of the secondary converter bridge 704 are illustrated by curves 712 for Imp. #2 and 710 for Imp. #1. The data points indicated by circles in Fig. 7 represent the online detected boundary operating conditions. As shown in Fig. 7 these data points may be obtained for the primary bridge for a negative phase shift (i.e. primary converter output voltage 504 lags the secondary bridge output voltage 518) and for a higher secondary bus voltage (d>1), and these data points may be obtained for the secondary bridge for a positive phase shift (i.e. primary converter output voltage 504 leads the secondary bridge output voltage 518) and for a higher primary bus voltage (d<1). As can be seen in the figure, the detected test points can be matched with the mathematical model (or lookup table) the of ZVS boundary conditions (in other words: the test points may be integrated into a mathematical model of ZVS boundary conditions to define single parameters of the AC coupling impedance or the coupling co-efficient of a WPT system.

It is to be noted that in spite of the dc input current another electrical quantity may be measured to detect an equivalent stagnating characteristic (e.g. voltage sensing of the primary-side bridge output voltage 310 and the secondary-side bridge output voltage 312, like described above and shown in Fig. 3.

In the above, it is assumed that the DC voltage ratio d is completely adjustable. However the ranges of the voltages V_{p,DC} and V_{s,DC} are usually limited. This range can be increased if two optional DC/DC converters 108 and 138 are part of the system architecture, Fig. 1.

Alternatively, the converter structure can also be embedded inside a separate test environment that allows proper impedance parameterization via wide DC bus voltage ranges in Fig.1.

Alternatively, a 3-level modulation technique may be employed with two additional phase shift angles [2]. The changes in the control architecture (wherein values may be controlled using a 3-level modulation) in the circuit of Fig. 1 may be as follows: In addition to the phase shift 514, variable time spans 508 and 510 are applied to the primary and secondary bridge. It is to be noted that there are two different ZVS boundaries per converter bridge circuit 102 and/or 104. Otherwise, the same principles apply as described for the modulation technique shown in Fig. 5.

In the following, a second step (for example a step of calculation of impedance parameters) of a method according to various embodiments will be described. [1] gives an analytical model for the Zero Voltage Switching (ZVS) boundaries of a dual-active dc-dc converter. There are various ways of detecting the impedance parameters in Fig 5.

In a first option, the mathematical model of [1] can be stored as a parameterized look-up table with initialized parameters of the single discretely modelled coupling impedances and then it is fitted against the collected measurement data, such that the impedance parameters are determined.

In a second option, the mathematical model may be solved numerically for the impedance parameters, by inserting the detected ZVS boundary points (d_{VZS#n}, δ_{ZVS#n}) into the mathematical model of [1].

For both options, a certain minimum number of operating points is required to define the relationship between the coupling impedance parameters (in Fig. 4A and Fig. 4B). Redundant operating points increase the accuracy of the methodology and a least square error algorithm (or similar) may be applied to achieve a high accuracy of the proposed method.

To achieve the absolute impedance values, one parameter may be (or assumed to be) known.

Publications [1] and [2] show how the ZVS boundaries change for different coupling impedances, which allows a 2D-scan detection strategy inside the first step of the method according to various embodiments. Also an initial (prior) first guess of the transformer parameters can be used as an initial starting point.

According to various embodiments, DC-DC dual-active converter systems may be provided with various topologies, such as a single phase system, for example a common full bridge/half bridge (for example 2 full bridges (shown in Fig. 3); for example 1 full bridge, 1 half bridge; or for example 2 half bridges), an NPC (Neutral Point Clamped) converter topology (which may work according to the same principle, wherein the mathematical model varies slightly), a T-Type topology (which may work according to the same principle, wherein the mathematical model varies slightly), or any combination (different primary and secondary side topology) of the mentioned topologies (which may work according to the same principle, wherein the mathematical model varies slightly), or such as a three phase system, wherein the mathematical model varies slightly), a T-Type topology (which may work according to the same principle, wherein the mathematical model varies slightly), or any combination (different primary and secondary side topology) of the mentioned topologies (which may work according to the same principle, wherein the mathematical model varies slightly).

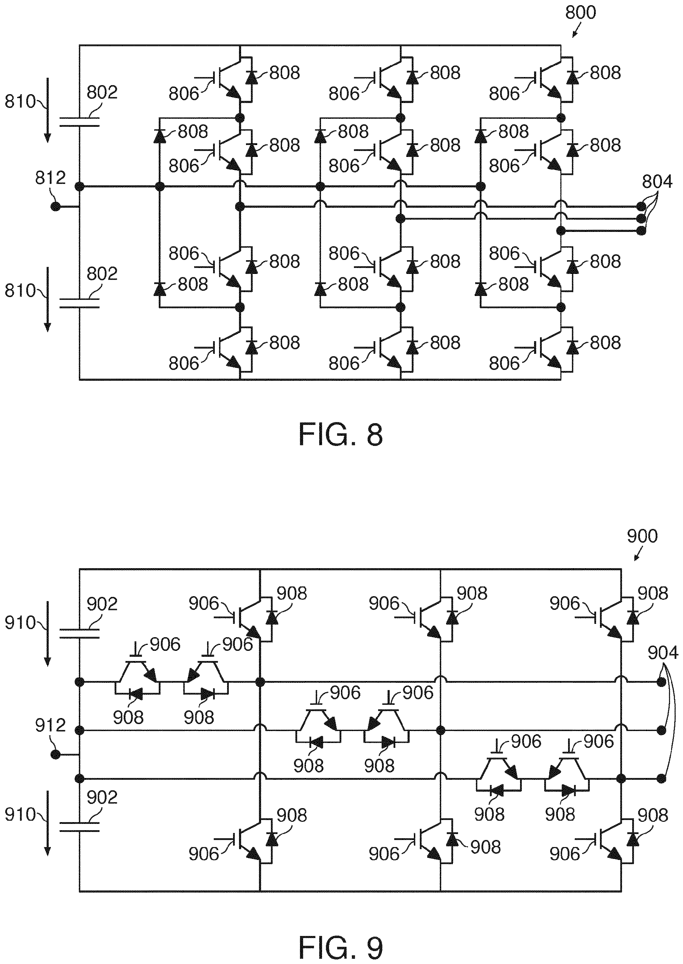

Fig. 8 shows an NPC (Neutral Point Clamped) circuit topology 800. A plurality of capacitors 802 (on which a voltage 810 against ground 812 may be provided), a plurality of transistors 806, and a plurality of diodes 808 generate a bridge output voltage at contacts 804.

Fig. 9 shows a three-phase t-type circuit topology 900. A plurality of capacitors 902 (on which a voltage 910 against ground 912 may be provided), a plurality of transistors 906, and a plurality of diodes 908 generate a bridge output voltage at contacts 904.

According to various embodiments, sensorless low-power detection of magnetic coupling in dual-active wireless or inductive power transfer (WPT) systems using practical switching impact may be provided. A typical system block diagram of a Wireless Power Transfer system is shown in Fig. 1. The main transmitter sub-system consist of the sender bridge 102, coupling transmitter coils 106 and the receiver bridge 104.

One focus problem to run a WPT system in an efficient and safe manner is the detection of the electro-magnetic coupling. Commonly used methodologies use additional sensor systems e.g. optical, radio etc. These systems increase component count and complexity thereby leading to further increase to the total system cost and simultaneously reduce the system reliability.

Wireless Power Transfer Systems (e.g. Wireless Charging of Electric Vehicles (EVs), Mobile Phones, Home Appliances) have to contend with misalignment between primary and secondary coils (for example in vertical axes and/or horizontal axes), i.e. for EVs (for example for automated parking system before actual EV charging starts, or for example detect whether coupling is sufficient before actual EV charging starts), the aging of coils, and/ or foreign objects placed in between the coils.

The precise detection of the magnetic coupling coefficient is necessary to avoid system failure and damage and to increase user safety. Commonly used methods may use an array of sensing devices to measure the geometrical position of one coil with respect to the other, in vertical axes and horizontal axes. These sensing systems add to the cost of the wireless power transfer system. Commonly used methods also require a translation from the geometrical domain (for example for a distances in meter) into electro-magnetic quantities (for example for inductances in Henry), which further reduces precision and reliability, since it is based on an idealized model. Idealized models do not take into account parts that cannot be modelled and furthermore coil deformations or foreign objects placed inside the physical transmitter area between the two coils.

According to various embodiments, the magnetic coupling-coefficient for a dual-active converter wireless power transfer (WPT) system can be detected in a low power pre-configuration routine which uses the impact of the inherent switching dead time around the Zero Voltage Switching (ZVS) boundaries of the sender and receiver converter bridge for standard phase shifted square wave (PSSW) modulation strategy. According to various embodiments, no additional sensing circuits are required, which reduces the system cost and the system reliability. According to various embodiments, direct detection of the coupling in electrical-magnetic domain rather than geometrical quantities may be provided. The detected coupling coefficient between the sender and receiver system may be used to align the positions of the two coils.

According to various embodiments, sensorless precise online detection of the coupling co-efficient in WPT systems using the practical switching impact and a subsequent integration into a mathematical model of the Zero Voltage Switching boundary conditions may be provided.

According to various embodiments, the first step as described above may further include the following processing. The sender and receiver controller like shown in Fig. 1 may agree to a common switching frequency f_{detect.}. This frequency may be selected to be higher than nominal operating frequency fₙₒₘ, such that the outgoing converter bridge impedance becomes inductive (in case of a series compensation network like shown in Fig. 4A, the series impedance of the coil leakage inductance and the series capacitor for sender and receiver side are in sum inductive) and Fig. 4B hence illustrates an equivalent model of this impedance network at this frequency.

As described above, additional dc-dc converters (like shown in Fig. 1) may be used to adopt the dc-dc link voltage ratio d of the WPT transmitter sub-system. For example, if an additional battery charger is integrated, it may control/vary the receiver-side DC link voltage

According to various embodiments, the second step as described above may further include the following processing. The actual discrete inductance parameters can be calculated based on the values of the series discrete capacitances. The self-inductance of the coils and the main (mutual) inductance define the coupling coefficient k.

This coupling co-efficient is now known by the controller 136 and the system can start nominal operation at nominal switching frequency/ies.

According to various embodiments, no physical sensors are implemented for geometrical measurements, or these physical sensors are only implemented to support the described detection method.

According to various embodiments, a prior detection with sender and receiver bridge both switching at a non-nominal frequency at low power transfer levels, where several operating points for the dc bridge voltage ratio and phase displacement angles are specifically driven by the controller, may be provided.

According to various embodiments, the detection may be supported by geometrical measurements to achieve a first guess estimation, which may ease and speed up the method.

Various embodiments may be applied to wireless power transfer systems, such as (uni- or bi-directional) wireless charging of electric vehicles, mobile phones, and/ or home appliances.

It is to be noted that various embodiments may be applied for a single active bridge topology (unidirectional power flow) with a passive diode bridge rectifier on the receiver side (in other words: receiver bridge), if additional auxiliary low power active switch devices are placed in parallel to the diode bridge rectifier, and are only operated during the low pow prior impedance detection.

According to various embodiments, a prior impedance detection routine may be provided wherein several operating points for the dc bridge voltage ratio and phase displacement angles are specifically driven by a controller.

## Claims

1. A method (200) of pre-configuring a dual-active bridge DC-DC converter comprising a controller (110), the method comprising:
increasing, by the controller (110), a commanded phase shift between a primary bridge circuit and a secondary bridge circuit;
determining (202) for a plurality of phase shifts, the occurrence of a phase shift error caused by a switching dead time in the converter;
detecting, by the controller (110), a zero voltage switching boundary condition under which the phase shift error vanishes; and
determining (204) a magnetic coupling coefficient of a wireless power transfer system of the dual-active bridge DC-DC converter by inserting the zero voltage switching boundary condition into a mathematical model,
wherein the system is configured to start nominal operation at nominal switching frequencies once the coupling coefficient is known by the controller, and
wherein detecting a zero voltage switching boundary condition comprises
detecting a stagnation of sensed circuit parameters while increasing the commanded phase shift between the two converter bridge circuits, and
wherein the sensed circuit parameters comprise at least one of an input DC bus current, an output DC bus current, or a bridge output voltage pulse width modulation pattern.

2. The method (200) of claim 1, further comprising:
setting a common switching frequency to two bridge circuits of the dual-active bridge DC-DC converter, which is different from the nominal switching frequency.

3. The method (200) of claim 1, further comprising:
setting a common switching frequency to two bridge circuits of the dual-active bridge DC-DC converter, which is higher than the nominal switching frequency.

4. The method (200) of claim 1,
wherein the determining of the magnetic coupling coefficient of the wireless power transfer system of the dual-active bridge DC-DC converter is employed prior to nominal operation to enhance operation, or to monitor a condition of in-circuit components of the wireless power transfer system or the dual-active converter.

## Patentansprüche

1. Verfahren (200) des Vorkonfigurierens eines dual-aktiven Brücken-DC-DC-Wandlers umfassend einen Controller (110), wobei das Verfahren umfasst:
Erhöhen, durch den Controller (110), einer befohlenen Phasenverschiebung zwischen einer Primärbrückenschaltung und einer Sekundärbrückenschaltung;
Bestimmen (202) für mehrere Phasenverschiebungen des Auftretens eines Phasenverschiebungsfehlers, der verursacht wird durch eine Schalttodzeit in dem Wandler;
Detektieren, durch den Controller (110), einer Nullspannungsschaltrandbedingung, unter der der Phasenverschiebungsfehler verschwindet; und
Bestimmen (204) eines Magnetkopplungskoeffizienten eines drahtlosen Energieübertragungssystems des dual-aktiven Brücken-DC-DC-Wandlers durch Einsetzen der Nullspannungsschaltrandbedingung in ein mathematisches Modell,
wobei das System ausgebildet ist zum Starten eines Nennbetriebs bei Nennschaltfrequenzen, nachdem der Koppelkoeffizient durch den Controller bekannt ist, und wobei das Detektieren einer Nullspannungsschaltrandbedingung das Detektieren einer Stagnation von erfassten Schaltungsparametern umfasst, während die befohlene Phasenverschiebung zwischen den beiden Wandlerbrückenschaltungen vergrößert wird, und
wobei die erfassten Schaltungsparameter mindestens einen eines eingegebenen DC-Busstroms, eines ausgegebenen DC-Busstroms oder eines Brückenausgangsspannungs-Impulsbreitenmodulationsmusters umfassen.

2. Verfahren (200) nach Anspruch 1, weiterhin umfassend:
Einstellen einer gemeinsamen Schaltfrequenz für zwei Brückenschaltungen des dual-aktiven Brücken-DC-DC-Wandlers, die von der Nennschaltfrequenz verschieden ist.

3. Verfahren (200) nach Anspruch 1, weiterhin umfassend:
Einstellen einer gemeinsamen Schaltfrequenz für zwei Brückenschaltungen des dual-aktiven Brücken-DC-DC-Wandlers, die höher ist als die Nennschaltfrequenz.

4. Verfahren (200) nach Anspruch 1,
wobei das Bestimmen des Magnetkopplungskoeffizienten des drahtlosen Energietransfersystems des dual-aktiven Brücken-DC-DC-Wandlers vor der Nennoperation zum Verbessern des Betriebs oder zum Überwachen einer Bedingung von schaltungsinternen Komponenten des drahtlosen Energieübertragungssystems oder des dual-aktiven Wandlers verwendet wird.

## Revendications

1. Procédé (200) de préconfiguration d'un convertisseur CC-CC à double pont actif comprenant un contrôleur (110), le procédé comprenant :
l'augmentation, par le contrôleur (110), d'un déphasage commandé entre un circuit en pont primaire et un circuit en pont secondaire ;
la détermination (202), pour une pluralité de déphasages, de l'occurrence d'une erreur de déphasage provoquée par un temps mort de commutation dans le convertisseur ;
la détection, par le contrôleur (110), d'une condition limite de commutation de tension nulle dans laquelle l'erreur de déphasage disparaît ; et
la détermination (204) d'un coefficient de couplage magnétique d'un système de transfert d'énergie sans fil du convertisseur CC-CC à double pont actif par insertion de la condition limite de commutation de tension nulle dans un modèle mathématique,
dans lequel le système est configuré pour démarrer un fonctionnement nominal à des fréquences de commutation nominales une fois que le coefficient de couplage est connu par le contrôleur, et
dans lequel la détection d'une condition limite de commutation de tension nulle comprend
la détection d'une stagnation de paramètres de circuit détectés pendant l'augmentation du déphasage commandé entre les deux circuits en pont de convertisseur, et
dans lequel les paramètres de circuit détectés en comprennent au moins un parmi un courant de bus CC, un courant de bus CC de sortie, et un motif de modulation de largeur d'impulsion de tension en sortie de pont.

2. Procédé (200) de la revendication 1, comprenant en outre :
le réglage d'une fréquence de commutation commune aux deux circuits en pont du convertisseur CC-CC à double pont actif, qui est différente de la fréquence de commutation nominale.

3. Procédé (200) de la revendication 1, comprenant en outre :
le réglage d'une fréquence de commutation commune aux deux circuits en pont du convertisseur CC-CC à double pont actif, qui est supérieure à la fréquence de commutation nominale.

4. Procédé (200) de la revendication 1,
dans lequel la détermination du coefficient de couplage magnétique du système de transfert d'énergie sans fil du convertisseur CC-CC à double pont actif est employée avant le fonctionnement nominal pour améliorer le fonctionnement, ou pour surveiller un état de composants dans le circuit du système de transfert d'énergie sans fil ou du double convertisseur actif.
